# EUROPEAN PATENT APPLICATION

(11) **EP 2 153 885 A1**
(43) Date of publication of application: **17.02.2010**
(21) Application number: 08162361.3
(22) Date of filing: 14.08.2008
(51) Int. Cl.: B01F 3/04, B01F 7/00

(54) **A foaming device for foaming a liquid substance**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A foaming device (101) for foaming a liquid substance. The device (101) comprises a foaming tool (103) having a foaming body (108, 109). This foaming body (108, 109) comprises a hollow solid (118, 119) provided with a plurality of holes (120). The device (101) further comprises a drive unit (105) for driving the foaming body (108, 109) around a central axis (121). The foaming body (108, 109) is limited by two axially spaced substantially open sides (123, 124 and 125, 126, respectively). This foaming tool (103) has a good performance and can be operated at relatively low rotational speeds.

## Description

### FIELD OF THE INVENTION

The invention relates to a foaming device for foaming a liquid substance, comprising a foaming tool having at least one foaming body comprising a hollow solid provided with a plurality of holes, and a drive unit for driving the foaming body around a central axis.

The invention further relates to a foaming tool for application in such a device.

The invention further relates to a method for foaming liquid substance.

### BACKGROUND OF THE INVENTION

Foaming devices for foaming liquid substance are known from the art. US-A 4007920 discloses a mixing and aerating device in which an impeller, drivable by a motor, is placed in a container. This impeller has a shape of a circular symmetrical curved section mounted centrally on a shaft which is driven during the foaming process at a rotational speed of 2250 to 3000 rounds per minute (rpm). In order to achieve foaming results US-A 4007920 teaches the use of a plurality of openings near a peripheral edge of the applied impeller or impellers.

### SUMMARY OF THE INVENTION

It is an object of the invention to provide a foaming device which is able to provide good foaming results at relatively low speeds of the foaming body.

The object of the invention is realized by the foaming device as defined in claim 1. Particularly, the foaming device according to the invention has at least one foaming body which is limited by two axially spaced substantially open sides.

Preferably, the foaming tool is during use substantially vertically arranged in the bowl or the container containing the liquid substance to be foamed. Usually, the foaming device is positioned in the centre of the bowl or container. The at least one foaming body inserts at least partly in the liquid substance to be foamed. While the at least one foaming body is being inserted into the liquid substance it is preferable to have the drive unit disengaged from the foaming tool or inactive to prevent splashing the liquid substance to be foamed. When the drive unit is engaged or activated, a rotating movement of the foaming tool around its central axis is caused. Due to the rotation of the part of the foaming tool inserted into the liquid substance a rotational movement of this liquid substance is created. Consequently, centrifugal forces force the liquid substance that is present inside the hollow solid of the at least one foaming body outwards as seen in a radial direction starting at the central axis through the holes of the hollow solid. This movement of substance leads to an under-pressure inside the hollow solid resulting in an inflow of liquid substance and gas through the substantially open sides of the hollow solid. This liquid substance is in turn forced to flow through the holes of the solid. The resulting flow pattern leads to gas being introduced into the liquid substance. As gas and liquid substance are flowing simultaneously through the holes of the hollow solid, foam is generated. When the desired foaming result has been reached the drive unit is disengaged or deactivated and the foaming tool removed from the bowl or container.

Due to the specific design of the foaming body, the foaming tool can be operated at relatively low rotational speeds.

The foaming device according to the invention can be applied for household use as well as for professional use. In professional environments the device can be used on a small scale as well as for large-scale industrial production of foam.

The foaming device can be used for foaming many different types of liquid substances, including but not limited to milk, egg white and cream.

The at least one foaming body can be made of any hard materials, especially metals (e.g. aluminum, copper, stainless steel, or the like), or hard plastics. To improve the cleanability of the foaming tool, the foaming tool can be coated with a smooth material, for example polytetrafluoroethylene (PTFE), a nano-coating or a sol-gel material.

In a preferred embodiment of the foaming device according to the invention the at least one foaming body is provided with at least one wing. The at least one wing stimulates the rotational movement of the liquid substance. This increases both the velocity of the liquid substance by which the liquid substance flows through the holes of the hollow solid and the under-pressure in the hollow solid. Consequently the flow pattern is intensified leading to more gas being introduced in the liquid substance. As the velocity of the gas-liquid substance mixture flowing through the holes is increased, the foaming is enhanced.

In a preferred embodiment of the foaming device according to the invention the at least one wing is provided in an area enclosed by the at least one foaming body. By placing the at least one wing in the area enclosed by the at least one foaming body the effect of the wing is enhanced leading to a more intensified flow pattern and further enhancement of the foaming.

In a preferred embodiment the foaming device according to the invention a first substantially open side of the at least one foaming body has a smaller radial dimension than a second substantially open side of the at least one foaming body. The difference in radial dimension between the two open sides of the at least one foaming body improves the flow pattern leading to more gas being introduced into the liquid substance and thereby a better and faster foaming result.

In a preferred embodiment of the foaming device according to the invention the at least one foaming body has a substantially frusto-conical shape. This shape further enhances the flow pattern in the liquid substance leading to more gas being brought into the liquid substance and thereby a better and faster foaming result.

In a preferred embodiment of the foaming device according to the invention the first substantially open side of the at least one foaming body is further located from the drive unit than the second substantially open side of the at least one foaming body seen along the central axis. In this arrangement of the at least one foaming body the flow pattern results in higher velocities to the top of the bowl or container in which area the gas is introduced into the liquid substance. This improves the introduction of gas into the liquid substance and thereby the foaming result.

In a preferred embodiment of the foaming device according to the invention the holes forming the plurality of holes of the at least one foaming body are small in size compared to the size of the at least one foaming body itself. Small sized holes create more turbulence and thereby increase the mixing between gas and liquid substance. This results in smaller applications times and a better foaming result.

In a preferred embodiment of the foaming device according to the invention the solid being part of the foaming body is in its entirety provided with a plurality of holes. By utilizing the entire surface of the solid the number of holes is maximized. As the number of holes is related to the foaming result, the foaming result is improved.

In a practical embodiment of the foaming device according to the invention the at least one foaming body is made of a material that changes of color to indicate the appropriateness of the actual temperature of the liquid substance to foaming. In such an embodiment the material can for example have three different colors: a first one to indicate the temperature of the liquid substance being in the optimal temperature range, a second one to indicate that the temperature of the liquid substance is below the optimal temperature range, and a third one to indicate that the temperature of the liquid substance is above the optimal temperature range. For example it is known from the art that the optimal temperature for foaming milk is around 55°C. In a practical embodiment of the foaming device according to the invention the first color might be shown below approximately 52°C, the second color between approximately 52°C and approximately 58°C and the third color above approximately 58°C. It will be recognized by a person appreciating the state of the art that the first and third color can be the same to reach the desired effect. The material causing the changes of color can be included in the at least one foaming body during the manufacturing of the at least one foaming body, alternatively it can be coated on the at least one foaming body following the manufacturing of the at least one foaming body.

In a practical embodiment of the foaming device according to the invention two temperature ranges are indicated by the changes in color of the at least one foaming body. For example, one color indicating that the temperature of the liquid substance is below a given value, the other indicating that the temperature of the liquid substance is above this given value.

In a preferred embodiment of the foaming device according to the invention at least two foaming bodies are arranged axially spaced along the central axis. The application of more than one foaming body leads to a stronger flow pattern than applying a single foaming body. Also, more holes can be provided. The combination of these two factors leads to more gas being introduced to the liquid substance resulting in a better foaming result.

In a practical embodiment the at least two foaming bodies arranged axially are nested in the other. By nesting the foaming bodies the interaction between the foaming bodies can be optimized leading to an increased foaming result.

In a preferred embodiment of the foaming device according to the invention the at least two foaming bodies have their first open sides located further from the drive unit than their second open sides, seen along the central axis. By orientating the at least two foaming bodies in the same direction the amplification of the flow pattern is maximized.

In a practical embodiment of the foaming device according to the invention the at least two foaming bodies have a substantially equal shape. This simplifies the manufacturing process of the foaming tool.

In a preferred embodiment of the foaming device according to the invention the first open sides of the at least two foaming bodies are spaced at a distance, seen along the central axis, between substantially 25% and substantially 175% of the radial dimension of the first open side. Particularly the distance is between substantially 75% and substantially 125% of the radial dimension of the first open side. Most preferred the distance is substantially equal to the radial dimension of the first open sides The distance by which the at least two foaming bodies are spaced influences their combined effect on the flow patterns. Experimentally it has appeared that it is preferred to place the at least two foaming bodies at these distances which result in the best combined flow pattern and thus the best foaming results.

In a preferred embodiment of the foaming device according to the invention the drive unit is arranged for driving the at least one foaming body with a rotational speed between 800 and 1200 rpm, particularly between 900 and 1000 rpm. Experimentally it has appeared that good foaming results are obtained when the foaming body is driven at speeds between 800 and1200 rpm. Very good foaming results are obtained when the foaming body is driven at speeds between 900 and 1000 rpm.

In a preferred embodiment of the foaming device according to the invention the foaming tool is detachably connected to the drive unit. This facilitates easy cleaning of the foaming body.

The invention further relates to a foaming tool comprising at least one foaming body limited by two axially spaced substantially open sides to be applied in a foaming device according to the invention.

The invention further relates to the use of a foaming device provided with a foaming tool comprising at least one foaming body limited by two axially spaced substantially open sides which tool is driven with a rotational speed between 800 and 1200 rpm, particularly between 900 and 1000 rpm.

The invention further relates to a method for foaming liquid substance making use of a foaming device provided with a foaming tool comprising at least one foaming body limited by two axially spaced substantially open sides and a drive unit to rotate the at least one foaming body with a rotational speed between 800 and 1200 rpm, particularly between 900 and 1000 rpm.

With reference to the claims it is noted that the invention also relates to all possible combinations of features and/or measures defined in the various claims.

It is to be noted that the use of openings in a tool used for foaming as presented in US-A 4007920 is further disclosed in US-A 5490727. This patent document teaches the use of higher rotational speeds of 3000 to 8000 rpm and the use of only several, specially crafted holes in the surface of the foaming tool. Thereby US-A 5490727 does not solve the problem of providing good foaming results at relatively low speeds of the foaming body. Furthermore, the specially crafted holes taught by US-A 5490727 are not required to provide a good foaming result with the foaming body of the foaming device according to the invention.

### BRIEF DESCRIPTION OF THE DRAWINGS

A detailed description of the invention is provided below. The description is provided by way of a non-limiting example to be read with reference to the drawings in which:
Figure 1 shows a schematic embodiment of a foaming device according to the invention, seen as a cut-through according to a side perspective.
Figure 2 shows a schematic embodiment of a lower part of the foaming tool shown in Figure 1, seen according to a side perspective.
Figure 3 shows a schematic embodiment of a foaming tool according to the invention, provided with a single foaming body, seen according to a bottom perspective.
Figure 4 shows a schematic embodiment of a foaming tool the according to the invention, provided with wings, seen according to a top perspective.
Figure 5 shows a schematic embodiment of the foaming tool according to the invention, provided with foaming bodies having each an elliptical frustum form, seen according to a side perspective.

### DETAILED DESCRIPTION OF THE EMBODIMENTS

In figures showing the same embodiment, the same numbers are used for the same parts.

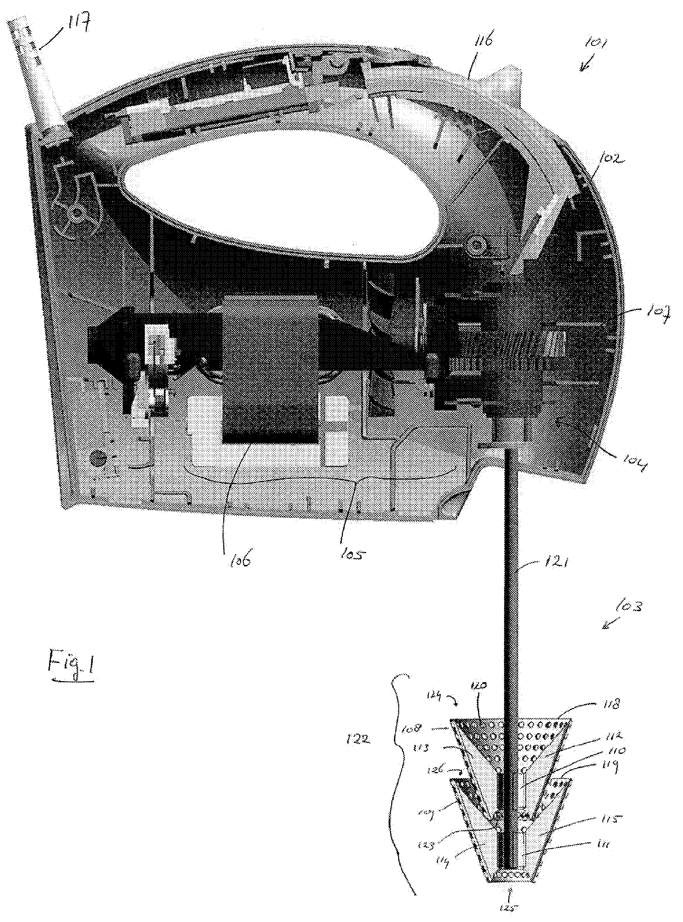

Figure 1 shows a foaming device 101 according to the invention. The foaming device 101 has a casing 102 and a foaming tool 103 with an axis 121. The foaming tool 103 is attached to the casing 102 in a coupling area 104. The foaming tool is driven by a drive unit 105 comprising an electric motor 106 and a gear system 107. Through the gear system 107 the axis 121 of the foaming tool 103 is rotated by the electric motor 106 when the electric motor 106 is engaged. In this embodiment the foaming tool 103 comprises two foaming bodies 108 and 109. In this embodiment the two foaming bodies 108 and 109 are of equal form. The foaming bodies 108 and 109 have the shape of hollow solids of revolution; more precisely they are of frusto-conical shape. The first foaming body 108 has a first substantially open side 123 and a second substantially open side 124. The first substantially open side 123 of the first foaming body 108 is located further from the casing 102 of the foaming device than the second substantially open side 124 of the first foaming body 108. The first and second substantially open sides 125 and 126 respectively of the second foaming body 109 are arranged likewise.

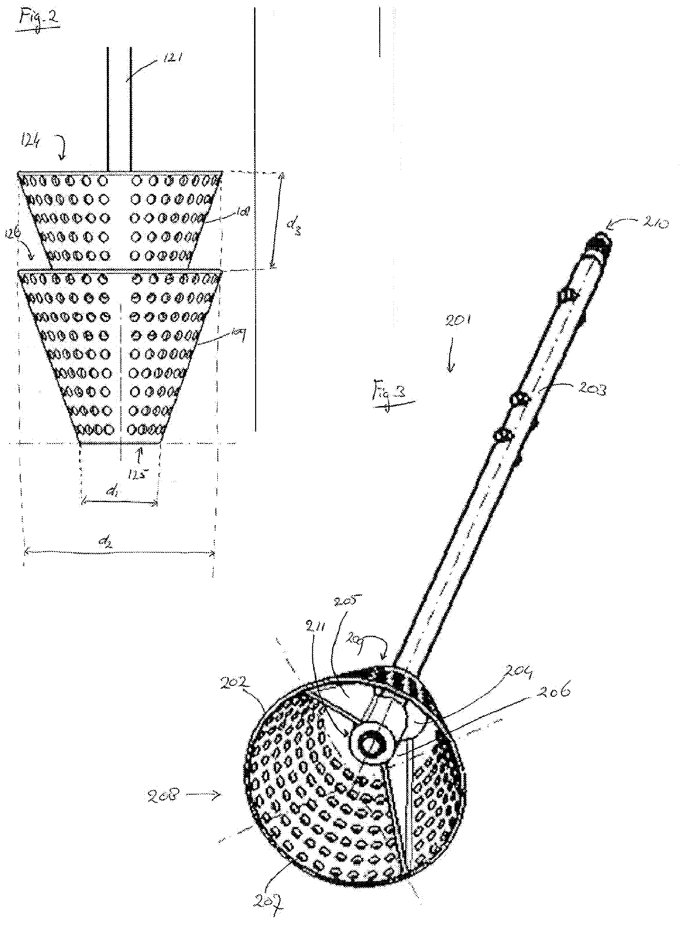

The foaming bodies 108 and 109 are connected to the axis 121 of the foaming tool 103 by foaming body connecting means 110 and 111. To enhance the foaming results during operation foaming wings 112, 113, 114 and 115 are present within the foaming bodies 108 and 109. Alternatively, as shown in Figure 3, the wings might be located on the outside of the foaming body. A combination of wings on the inside and the outside of the foaming body is also possible. The foaming bodies 108 and 109 have a hollow solid 118 and 119 respectively, which is spread with a plurality of holes 120.

The electric motor 106 is controllable by the user though a control button 116. In this embodiment the control function of the control button 116 is limited to 'on' and 'off' only. Placing the control button 116 in the 'on' position causes the electric motor 106 to rotate at a speed suited for the foaming tool 103 to create foam. Good foaming results are obtained when the foaming tool 103 rotates at a rotational speed between 800 and 1200 rounds per minute (rpm). Very good foaming results are obtained when the foaming tool rotates at a rotational speed between 900 and 1000 rpm.

In alternative embodiments the control button 116 can have various positions, such as 'off', 'low speed', 'medium speed' and 'high speed', allowing the user to control the speed at which the electric motor 106 and therefore the foaming tool 103 will rotate. This allows the user to adapt the rotational speed of the foaming tool 103 to the specific characteristics of the liquid substance to be foamed.

The foaming device 101 has a power cord outlet 117 by which the foaming device can be connected to an electricity source, e.g. the mains. In alternative embodiments the foaming device 101 might be cordless, having a battery or the like inside the casing 102 to provide power to the electric motor 106.

The electric wiring associated with the power cord and the control button 116 is not depicted in Figure 1 as this wiring is well known in the art.

When a liquid substance is to be foamed, it will usually be inside a beaker, bowl, container, or the like. While the electric motor 106 is disengaged the foaming tool 103 is positioned in the beaker, bowl, container or the like such that at least part of at least one foaming body is inside the liquid substance. In order to obtain good performance for the foaming tool 103 of Figure 1, at least part of both foaming bodies 108 and 109 are to be submerged in the liquid substance. Following the placement of the foaming tool 103 in the liquid substance, the electric motor 106 is engaged through the control button 116. Alternatively, the electric motor might be engaged before the foaming tool 103 is placed in the liquid substance. However, this might lead to splashing the liquid substance which in general is considered to be undesirable.

When the foaming tool 103 is inserted in the liquid substance and the motor 106 is engaged, the rotation of the foaming bodies 108 and 109, insofar they are submerged in the liquid substance, will cause the liquid substance, such as milk, egg white or cream, to rotate. The rotation of the liquid substance is enhanced by the wings 112, 113, 114 and 115. Due to the rotation of the liquid substance centrifugal forces come into existence, forcing the liquid substance outwards, as seen in a radial direction starting from axis 121, through the holes 120 in the hollow solid 118 and 119 of the foaming bodies 108 and 109 respectively. The movements of the liquid substance will cause a turbulent flow pattern inside the beaker, bowl, container or the like. Due to this turbulent flow pattern gas from the surrounding atmosphere will be captured by the liquid substance. Usually, this gas will be air. To prevent spoilage of the liquid substance, it is preferable to align the axis 121 substantially vertical, or parallel to the sidewall of the beaker, bowl, container or the like.

The foaming liquid being forced through the holes from the inside of the foaming bodies 108 and 109 to the outside of these foaming bodies 108 and 109 leads to an under-pressure inside the foaming bodies 108 and 109 resulting in an inflow of liquid substance and gas to the area inside the foaming bodies 108 and 109. This liquid substance and gas is in turn forced to flow through the holes 120 of the hollow solids 118 and 119 of the foaming bodies 108 and 109 respectively. As air and liquid substance are flowing simultaneously through the holes 120 of the hollow solid 118 and 119 of the foaming bodies 108 and 109 respectively, foam is generated. When the user is satisfied with the foaming result the user disengages the electric motor 106 and removes the foaming tool 103 from the beaker, bowl, container or the like containing the foam. Alternatively, the user might remove the foaming tool 103 while the electric motor is engaged, however this can lead to splashing the foam which is generally considered to be undesirable. It is noted that the verb "to engage", as used in this paper, also means "to energize".

The foaming bodies 108 and 109 can be made of any hard materials, especially metals (e.g. aluminum, copper, stainless steel, or the like), or hard plastics. Due to the torsional forces acting on the axis 121 of the foaming tool 103, the foaming tool axis 121 is preferably made of material capable of resisting these forces like metals (e.g. aluminum, copper, stainless steel, or the like). To improve the cleanability of the foaming tool, the foaming tool can be coated with a smooth material, for example polytetrafluoroethylene (PTFE), a nano-coating or a sol-gel material.

Figure 2 shows the lower part 122 of the foaming tool 103 as shown in Figure 1 from a side perspective. The first substantially open sides 123 (not visible in Figure 2) and 125 of the first and second foaming bodies 108 and 109, respectively, have a radial dimension d₁. The second substantially open sides 124 and 126 of the first and second foaming bodies 108 and 109, respectively, have a radial dimension d₂. The distance between the second substantially open sides 124 and 126 of the first and second foaming bodies 108 and 109, respectively, is denoted by d₃. As the foaming bodies 108 and 109 are of equal shape, d₃ also denotes the distance between the first substantially open sides 123 and 125 of the first and second foaming bodies 108 and 109, respectively. Good foaming results are obtained when the distance d₃ is between substantially 25% of d₁ and substantially 175% of d₁. Preferably, the distance d₃ is between substantially 75% of d₁ and substantially 125% of d₁. Most preferably, the distance d₃ is substantially equal to d₁. In this embodiment the first foaming body 108 and the second foaming body 109 are arranged nested along the central axis, as the first substantially open side 123 of the first foaming body 108 is located between the first substantially open side 125 of the second foaming body 109 and the second substantially open side 126 of the second foaming body 109, seen in a direction along the axis 121.

Figure 3 shows a detachable foaming tool 201 being detached from a foaming device (not shown). The foaming tool 201 has one foaming body 202 and an axis 203. During operation the foaming tool 201 is connected to a foaming device at a proximal end 210 of the axis 203 and rotated around the axis 203. The detachable foaming tool 201 is preferably attached to a foaming device before the foaming device is engaged. The coupling between the detachable foaming tool 201 and the foaming device is well known from the art and not detailedly disclosed here. The foaming body 202 is connected to the axis 203 by a connecting means 204. The connection means can for example be formed by two small bars advantageously placed diametrically to each other on the axis of the foaming body connecting the foaming body with the axis. The person skilled in the art will recognize many other ways of connecting the foaming body to the central axis without considerably blocking either of the substantially open sides of the foaming body. Inside the one foaming body, wings 205 and 206 are present. The hollow solid of the foaming body 202 is spread with a plurality of holes 207. The foaming body 202 has a first substantially open side 208 and a second substantially open side 209. The first substantially open side 208 is located closest to a distal end 211 of the axis 203; the second substantially open side 209 is located closest to the proximal end 210 of the axis 203.

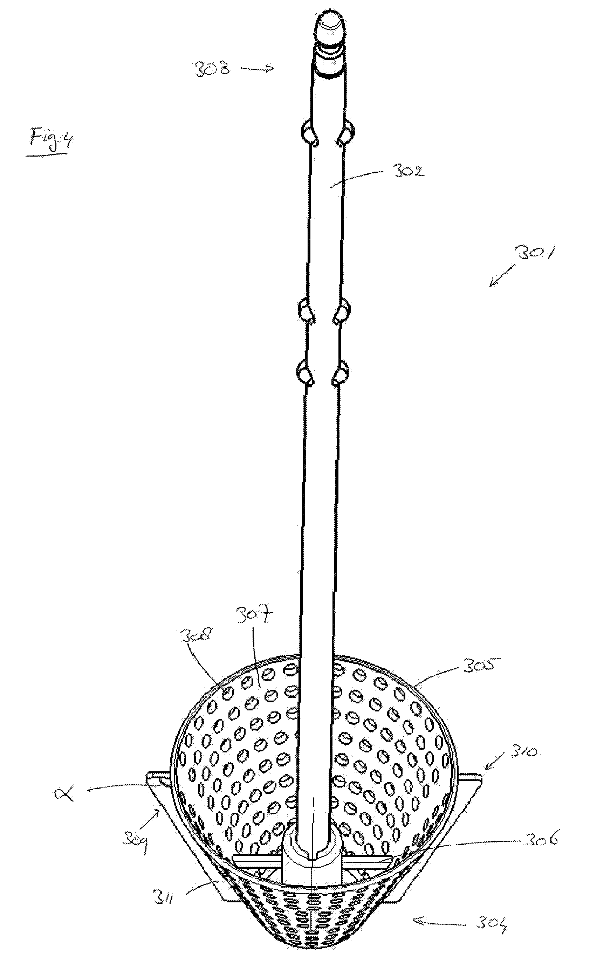

Figure 4 shows a detachable foaming tool 301 being detached from a foaming device. The foaming tool has an axis 302. The foaming tool axis 302 is attached to the foaming device at a proximal end 303. Near a distal end 304 of the foaming tool axis 302 a foaming body 305 is connected by a connecting means 306. The foaming body has a hollow solid 307. The hollow solid 307 of the foaming body 305 is spread with a plurality of holes 308. To the outside of the foaming body 305, as seen in a radial direction from the axis 302, wings 309 and 310 are attached to the foaming body 305. The wings 309 and 310 enhance the motion of the foaming liquid during operation of the foaming tool. The embodiment of Figure 3 has two wings 309 and 310 placed substantially diametrically on the hollow solid 307 of the foaming body 305 with respect to the axis 302. In alternative embodiments a different number of wings is possible. From a constructional point of view it is preferable to have the wings distributed evenly over the circumference of the foaming body. During operation of the foaming tool, friction forces are experienced by the wings. It is advantageous to spread those friction forces evenly over the circumference of the foaming body and thereby evenly over the connecting means connecting the foaming body to the axis. Further, this enhances the rotational stability of the foaming tool.

Wings 309 and 310 are extending substantially radially from the hollow solid 307 of the foaming body 305, whereby the sides of the sides of wings 309 and 310 make an angle α of substantially 90 degrees with the hollow solid 307 of the foaming body 305. In Figure 4 this is illustrated by a surface 311 of wing 309 making an angle α with the hollow solid 307 of the foaming body 305. In alternative embodiments the angle α can have other values.

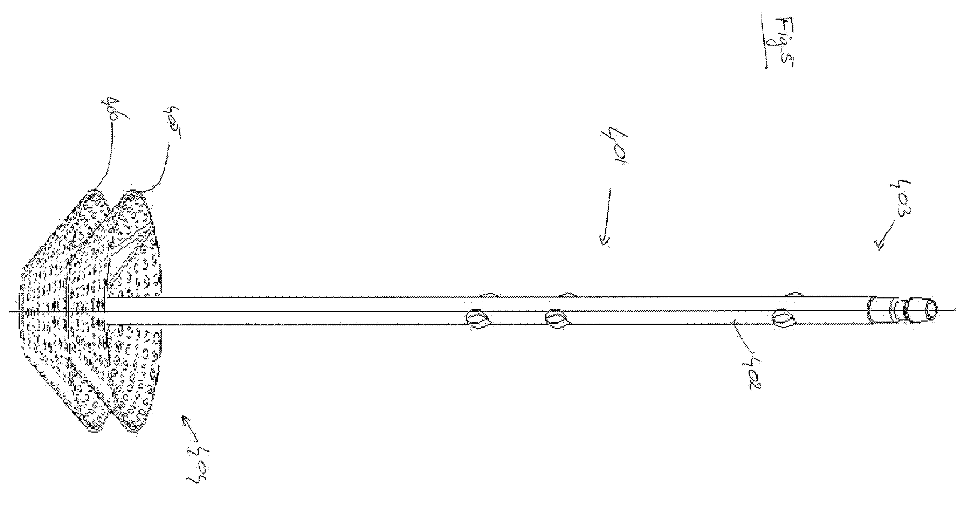

Figure 5 shows a detachable foaming tool 401 having an axis 402 which is attachable to a foaming device at its proximal end 403. Two foaming bodies 405 and 406 are provided near a distal end 404 of the axis 402. The foaming bodies 405 and 406 are of substantially equal form. The foaming body 405 has an elliptical frustum form.

While the invention has been illustrated and described in detail in the drawings and in the foregoing description, the illustrations and the description are to be considered illustrative or exemplary and not restrictive. The invention is not limited to the disclosed embodiments. It is noted that the foaming device according to the invention and all its components can be made by applying processes and materials known per se. In the set of claims and the description the word "comprising" does not exclude other elements and the indefinite article "a" or "an" does not exclude a plurality. Any reference signs in the claims should not be construed as limiting the scope. It is further noted that all possible combinations of features as defined in the set of claims are part of the invention.

### LIST OF REFERENCE NUMERALS

- 101: foaming device
- 102: casing
- 103: foaming tool
- 104: coupling area
- 105: drive unit
- 106: motor
- 107: gear system
- 108: first foaming body
- 109: second foaming body
- 110: first foaming body connecting means
- 111: second foaming body connecting means
- 112: foaming wing
- 113: foaming wing
- 114: foaming wing
- 115: foaming wing
- 116: control button
- 117: power cord outlet
- 118: hollow solid of first foaming body
- 119: hollow solid of second foaming body
- 120: foaming body hole
- 121: foaming tool axis
- 122: lower part of foaming tool
- 123: first substantially open side of first foaming body
- 124: second substantially open side of first foaming body
- 125: first substantially open side of second foaming body
- 126: second substantially open side of second foaming body

- 201: detachable foaming tool
- 202: foaming body

- 203: foaming tool axis
- 204: connecting means
- 205: wing
- 206: wing
- 207: hole
- 208: first substantially open side
- 209: second substantially open side
- 210: proximal end of the foaming tool axis
- 211: distal end of the foaming tool axis

- 301: detachable foaming tool
- 302: foaming tool axis
- 303: proximal end of foaming tool axis
- 304: distal end of foaming tool axis
- 305: foaming body
- 306: connecting means connecting the foaming body to the foaming axis
- 307: hollow solid of the foaming body
- 308: hole
- 309: wing
- 310: wing
- 311: wing side surface

- 401: foaming tool
- 402: foaming tool axis
- 403: proximal end of foaming tool axis
- 404: distal end of foaming tool axis
- 405: first foaming body
- 406: second foaming body

## Claims

1. A foaming device for foaming a liquid substance , comprising
- a foaming tool comprising at least one foaming body comprising a hollow solid provided with a plurality of holes, and
- a drive unit for driving the foaming body around a central axis,
wherein the at least one foaming body is limited by two axially spaced substantially open sides.

2. The device according to claim 1, wherein the at least one foaming body is provided with at least one wing.

3. The device according to claim 2, wherein the at least one wing is provided in an area enclosed by the at least one foaming body.

4. The device according to claim 1 or 2, wherein a first substantially open side of the at least one foaming body has a smaller radial dimension than a second substantially open side of the at least one foaming body.

5. The device according to claim 4, wherein the at least one foaming body has a substantially frusto-conical shape.

6. The device according to claim 4, wherein the first substantially open side of the at least one foaming body is further located from the drive unit than the second substantially open side of the at least one foaming body seen along the central axis.

7. The device according to claim 1, wherein the holes forming the plurality of holes of the at least one foaming body are small in size compared to the size of the at least one foaming body itself.

8. The device according to claim 1, wherein the solid in its entirety is provided with a plurality of holes.

9. The device according to claims 1, wherein at least two foaming bodies are arranged axially spaced along the central axis.

10. The device according to claim 9, wherein the at least two foaming bodies have substantially equal shapes.

11. The device according to claim 10, wherein the first open sides of the at least two foaming bodies are spaced at a distance, seen along the central axis, between substantially 25% and substantially 175% of the radial dimension of the first open side, particularly between substantially 75% and substantially 125% of the radial dimension of the first open side, and more particularly at a distance substantially equal to the radial dimension of the first open sides..

12. The device according to any one of the claims 1, 4, 7 or 9, wherein the drive unit is arranged for driving the at least one foaming body with a rotational speed between 800 and 1200 rpm, particularly between 900 and 1000 rpm.

13. The device according to claim 1, wherein the foaming tool is detachably connected to the drive unit.

14. A foaming tool comprising at least one foaming body comprising a hollow solid provided with a plurality of holes and limited by two axially spaced substantially open sides to be applied in the device according to any one of the preceding claims, **characterized by** the features as defined in any one of the preceding claims.

15. A method for foaming a liquid substance, particularly milk, comprising the steps of:
- pouring the liquid substance into a container;
- making use of a foaming device comprising
- at least one foaming body comprising a hollow solid provided with a plurality of holes and limited by two axially spaced substantially open surfaces, and
- a drive unit for driving the at least one foaming body around a central axis;
- inserting the at least one foaming body such at least partly into the liquid substance;
- energizing the drive unit to rotate the at least one foaming body with a rotational speed between 800 and 1200 rpm, particularly between 900 and 1000 rpm.
